# EUROPÄISCHE PATENTSCHRIFT

(11) **EP 3 365 191 B1**
(45) Veröffentlichungstag und Bekanntmachung des Hinweises auf die Patenterteilung: **16.09.2020**
(21) Anmeldenummer: 15791534.9
(22) Anmeldetag: 23.10.2015
(51) Int. Cl.: B60J 1/00, B60J 7/04, B29C 44/12

(54) **VERFAHREN ZUM BEARBEITEN EINES HALTEELEMENTS, ANORDNUNG FÜR EIN KRAFTFAHRZEUG UND SYSTEM FÜR EIN KRAFTFAHRZEUG**
METHOD FOR FORMING A HOLDING ELEMENT, ARRANGEMENT FOR A MOTOR VEHICLE AND SYSTEM FOR A MOTOR VEHICLE
PROCÉDÉ DE TRAITEMENT D'UN ÉLÉMENT DE SUPPORT, INSTALLATION POUR UN VÉHICULE AUTOMOBILE ET SYSTÈME POUR UN VÉHICULE AUTOMOBILE

(43) Veröffentlichungstag der Anmeldung: 29.08.2018
(73) Patentinhaber: Webasto SE, 82131 Stockdorf (DE)
(72) Erfinder: GROSSER, Florian, 82131 Stockdorf (DE); DUST, Herbert, 82131 Stockdorf (DE); HARNISCHFEGER, Bernhard, 82131 Stockdorf (DE)
(74) Vertreter: Epping - Hermann - Fischer
(86) Internationale Anmeldenummer: PCT/EP2015/074637
(87) Internationale Veröffentlichungsnummer: WO 2017/067608

(56) Entgegenhaltungen:
- DE-A1-102013 106 192
- DE-C1- 19 637 793

## Beschreibung

Die vorliegende Erfindung betrifft ein Verfahren zum Bearbeiten eines Halteelements sowie eine Anordnung und ein System für ein Kraftfahrzeug, die dazu geeignet sind, ein sicheres und zuverlässiges Bearbeiten einer Scheibe für das Kraftfahrzeug zu ermöglichen.

Bei einer Konstruktion von Kraftfahrzeugen werden Scheiben für Kraftfahrzeuge zum Beispiel mittels einer Umschäumung für ein weiteres Verarbeiten vorbereitet. Im Rahmen eines solchen Umschäumungsprozesses werden Bauteile mit der Scheibe verbunden, die beispielsweise ein Anbinden der Scheibe an der Karosserie des Kraftfahrzeugs ermöglichen. Dies kann unter anderem ein Verbinden von Glasscheiben und Kunststoffbauteilen betreffen, die an der Glasscheibe positioniert werden sollen. Ein solches Umschäumen ist zum Beispiel in dem Dokument DE 200 06 238 U1 beschrieben. Auch das Dokument DE 196 37 793 C1 beschreibt eine Umschäumung einer Glasscheibe.

Bei einem solchen Umschäumungsprozess wird üblicherweise die zu bearbeitende Scheibe mit metallischen Haltewinkeln in Anlage gebracht und für das Umschäumen entsprechend positioniert. Um insbesondere in Bezug auf einen Kontakt zwischen metallischen Haltewinkeln und Glasscheiben lokale Spannungen zwischen den Haltewinkeln und der anliegenden Scheibe zu reduzieren, werden die Haltewinkel manuell mit Schaumbändern versehen. Solche Schaumbänder werden auf die Oberfläche der Haltewinkel aufgeklebt, die der aufzulegenden Scheibe zugewandt ist, um als Puffer einen Kontakt zwischen Metall und Glas zu vermeiden. Allerdings müssen die Schaumbänder in der Regel für verschiedene Haltwinkel entsprechend angepasst werden und bieten aufgrund des manuellen Aufbringens nur eine eingeschränkte, reproduzierbare Positionsgenauigkeit.

Es ist eine Aufgabe, die der Erfindung zugrunde liegt, ein Verfahren zum Aufbringen eines Halteelements sowie eine Anordnung und ein System für ein Kraftfahrzeug zu schaffen, die dazu geeignet sind, auf einfache Weise ein sicheres, zuverlässiges und kostengünstiges Bearbeiten einer Scheibe für das Kraftfahrzeug zu ermöglichen.

Die Aufgabe wird durch die Merkmale der unabhängigen Patentansprüche gelöst.

Ein erfindungsgemäßes Verfahren zum Bearbeiten und Aufbringen eines Halteelements für ein Kraftfahrzeug umfasst ein Bereitstellen eines Halteelements mit einer Anlagefläche, die zur Anlage an eine Scheibe ausgebildet ist, und ein Bereitstellen einer pumpfähigen Substanz mit vorgegebenen Materialeigenschaften. Das Verfahren umfasst weiter ein maschinelles Aufbringen der Substanz an mindestens einer vorgegebenen Position auf der Anlagefläche des Halteelements und dadurch Initiieren eines selbstschäumenden Prozesses, sodass in Abhängigkeit der Materialeigenschaften der Substanz ein Kunststoffformteil mit vorgegebener Elastizität ausgebildet wird, um bei einem Anliegen der Scheibe an dem Halteelement einen vorgegebenen Abstand zwischen der Scheibe und dem Halteelement auszubilden und bei einem Weiterverarbeiten der Scheibe Spannungskräften zwischen der Scheibe und dem Halteelement entgegenzuwirken. Das Kunststoffformteil wird ferner so ausgebildet, dass es sich bei einem Anliegen der Scheibe an dem Halteelement lediglich zwischen der Scheibe und dem Haltelement erstreckt.

Mit dem beschriebenen Verfahren wird auf kostengünstige Weise ein sicheres und zuverlässiges Bearbeiten von Scheiben und plattenförmigen Werkstücken für Kraftfahrzeuge ermöglicht. Das mit einem Kunststoffformteil versehene Halteelement realisiert zum Beispiel eine sichere Anlage für eine zu bearbeitende Scheibe, sodass auf einfache Weise ein sicherer Halt an der Scheibe mit vorgegebenen Abstand zwischen Halteelement und Scheibe ermöglicht wird und Beschädigungen durch Spannungskräften entgegengewirkt wird. Somit ist eine zuverlässige Positionierung der Scheibe, beispielweise für einen nachfolgenden Umschäumungsprozess, realisierbar und es wird ein Beitrag für eine verminderte Wahrscheinlichkeit von Kratzern, Rissen und Absplitterungen der anliegenden Scheibe geleistet.

Mittels des maschinellen Aufbringens der pumpfähigen Substanz wird eine zeitsparende und prozesssichere Applikation der Substanz ermöglicht, die ein kontrolliertes und zuverlässiges Ausbilden des Kunststoffformteils realisiert und insbesondere in Bezug auf Form und Position des auszubildenden Kunststoffformteils eine nutzbringende Reproduzierbarkeit gewährleistet. Unter anderem werden somit Positionierungsfehler des auszubildenden Kunststoffformteils vermieden, die beispielsweise bei einem manuellen Aufkleben von Schaumbändern nur schwierig zu unterbinden sind.

Das Kunststoffformteil wirkt als elastische Auflage Spannungskräften bei einem Anliegen und Weiterverarbeiten der Scheibe entgegen und bildet einen definierten Abstand zwischen dem Halteelement und der Scheibe aus.

Spannungskräfte können insbesondere aufgrund nachfolgender Prozessschritte entstehen, indem beispielsweise die Scheibe und das Halteelement umschäumt werden und aufgrund eines Schrumpfungsverhaltens einer solchen Umschäumung Spannungskräfte zwischen dem Halteelement und der Scheibe erzeugt werden. Mittels des beschriebenen Verfahrens zum Bearbeiten und Aufbringen des Halteelements und zum Ausbilden des Kunststoffformteils kann solchen Spannungskräften gezielt entgegengewirkt und ein sicherer Abstand zwischen dem Halteelement und der Scheibe eingestellt werden, um das Halteelement gezielt von der Scheibe zu beabstanden und einen direkten Kontakt sowie Beschädigungen der Scheibe, wie einem Glasbruch, zu vermeiden.

Das Halteelement kann einstückig ausgebildet sein oder auch mehrere zueinander separate Haltekomponenten aufweisen, die einen stabilen Halt der zu bearbeitenden Scheibe realisieren. Auf den Anlageflächen der jeweiligen Haltekomponenten sind dann zum Beispiel ein oder mehrere Kunststoffformteile ausgebildet und ermöglichen einen gewünschten Abstand des Halteelements zu der Scheibe. Darüber hinaus kann das Halteelement auch auf mehreren Seiten der anliegenden Scheibe angeordnet sein, sodass beispielsweise im Fall eines mehrstückig ausgebildeten Halteelements einige Haltekomponenten eine Auflage für eine Unterseite der Scheibe realisieren, während weitere Haltekomponenten an Seitenflächen und/oder einer Oberseite der Scheibe angeordnet sind, um einen zuverlässigen Halt zu gewährleisten und die zu bearbeitende Scheibe für eine weitere Verarbeitung, wie ihr Anbinden an eine Karosserie eines Kraftfahrzeugs, vorzubereiten. Dabei kontaktieren die Haltekomponenten jeweils mittels ihrer Kunststoffformteile Oberflächen der Scheibe und sind sicher und zuverlässig beabstandet.

Das Kunststoffformteil auf der Anlagefläche des Halteelements realisiert an zumindest einer dafür vorgesehenen Position ein elastisches Element und wirkt als Puffer zwischen dem Halteelement und der Scheibe, um insbesondere einen direkten Kontakt zwischen dem Halteelement und der Scheibe zu verhindern. Die Materialeigenschaften des auszubildenden Kunststoffformteils sind abhängig von denen der aufzutragenden Substanz, die beispielsweise im Rahmen eines Spritzprozesses mittels eines dazu befähigten Spritz- oder Pumpwerkzeuges mit gewünschter Dosierbarkeit auf der Anlagefläche des Halteelements aufgebracht wird. Nach dem Austreten der Substanz aus dem jeweiligen Werkzeug und dem Auftragen auf der Anlagefläche des Halteelements wird ein selbstaufschäumender Prozess initiiert und dadurch das Kunststoffformteil ausgebildet. Das Kunststoffformteil ist somit als Endzustand des selbstschäumenden Prozesses realisiert und insbesondere hinsichtlich einer gewünschten Elastizität mit definierte Höhe ausgebildet, um einen vorgegebenen Abstand zwischen dem Halteelement und der anliegenden Scheibe zu realisieren.

Gemäß einer Weiterbildung des Verfahrens umfasst das Bereitstellen der pumpfähigen Substanz ein Bereitstellen einer ersten Komponente und einer zweiten Komponente mit jeweils vorgegebenen Materialeigenschaften. Das Aufbringen der Substanz umfasst folglich ein Aufbringen der ersten Komponente und zweiten Komponente an mindestens einer vorgegebenen Position auf der Anlagefläche des Halteelements und dadurch Initiieren eines selbstschäumenden Prozesses, sodass in Abhängigkeit der jeweiligen Materialeigenschaften der ersten und zweiten Komponente ein Kunststoffformteil mit vorgegebener Elastizität ausgebildet wird.

Die Materialeigenschaften des Kunststoffformteils sind entsprechend abhängig von denen der ersten und zweiten Komponente, die das Kunststoffformteil, beispielsweise im Rahmen eines Spritzprozesses ausbilden. Die erste und zweite Komponente weisen aus diesem Grund vorgegebene Materialeigenschaften auf, um ein gewünschtes Ausbilden des Kunststoffformteils mit vorgegebener Geometrie zu realisieren. Insbesondere in Bezug auf ein Auftragen im Rahmen eines Spritzprozesses sind die erste und zweite Komponente als flüssige oder pumpfähige Materialien mit vorgegebener Viskosität ausgebildet, die mittels eines Spritzwerkzeuges auf die Anlagefläche des Halteelements aufgetragen werden.

Beispielsweise sind die erste und zweite Komponente in jeweiligen Materialbehältern bereitgestellt und werden zum Aufbringen auf die Anlagefläche des Halteelements über Zuleitungen einem Mischkopf zugeführt und mittels einer Dosierdüse aufgetragen. In dem Mischkopf werden die erste und zweite Komponente mit einem vorgegebenen Mengenverhältnis reaktiv bereitgestellt und mittels der Dosierdüse an gewünschter Position auf der Anlagefläche des Halteelements aufgetragen, sodass erst unmittelbar nach dem Auftragen der ersten und zweiten Komponente der selbstschäumende Prozess zum Ausbilden des Kunststoffformteils initiiert wird.

Die aufzutragende Substanz beziehungsweise die erste und zweite Komponente ermöglichen das Ausbilden des Kunststoffformteils mit beliebigen Geometrien, sodass gezielt an den Positionen auf der Anlagefläche des Halteelements ein elastisches Element aufgebracht werden kann, an denen ein Puffer und ein Ausbilden eines definierten Abstands zwischen der Scheibe und dem Halteelement nutzbringend ist, um beispielsweise lokale Spannungsspitzen auszugleichen. Somit kann zum Beispiel auf den Einsatz von kostspieligen Schaumbändern verzichtet werden, die manuell aufgeklebt und hinsichtlich ihrer Abmessungen zeitaufwendig an verschiedene Anlageelemente angepasst werden müssen. Diesbezüglich weisen die pumpfähige Substanz und entsprechend die erste und zweite Komponente vorteilhafterweise eine gewisse Dosierbarkeit auf, um ein sparsames und kontrolliertes Auftragen und Ausbilden des Kunststoffformteils zu ermöglichen.

Abhängig von der Viskosität oder Zähigkeit der Substanz sowie der ersten und/oder zweiten Komponente wird ein unkontrolliertes Zerlaufen oder Auseinanderfließen verhindert und ein Teil der Anlagefläche des Halteelements gezielt benetzt. Die Substanz beziehungsweise die beiden Komponenten können in gewissem Maße gewollt zerfließen, sodass zum Beispiel nach einigen Minuten 50% einer Vernetzungsreaktion abgeschlossen ist und eine Grundfläche des Kunststoffformteils ausgehärtet ist. Abhängig von der Materialzusammensetzung der Substanz oder der ersten und/oder zweiten Komponente und des daraus resultierenden selbstschäumenden Prozesses wird dann zum Beispiel eine vorgegebene Höhe des Kunststoffformteils ausgebildet, welche sich auf eine Oberflächennormale der Anlagefläche bezieht und einen vorgegebenen Abstand zwischen dem Halteelement und der anliegendenScheibe realisiert.

Mittels des beschriebenen Verfahrens ist eine einfache und kostengünstige Bearbeitung des Halteelements realisierbar, welches weiter eine zuverlässige und kostensparende Verarbeitung einer Scheibe für ein Kraftfahrzeug ermöglicht und somit zu einer vereinfachten und zeitsparenden Konstruktion eines Kraftfahrzeugs beiträgt.

Beispielsweise werden die erste und zweite Komponente mittels einer Spritzpistole oder Dosierdüse in Tropfenform an einer oder mehreren vorgegebenen Positionen auf der Anlagefläche des Halteelements aufgebracht und realisieren punkt- oder zylinderförmige Kunststoffformteile, die im Wesentlichen unabhängig von der Geometrie des Halteelements sind.

Gemäß einer Weiterbildung umfasst das Verfahren ein Bereitstellen der ersten Komponente als Isocyanat und der zweiten Komponente als Polyol.

Gemäß einer Weiterbildung umfasst das Verfahren ein Aufbringen der ersten und zweiten Komponente und dadurch Ausbilden des Kunststoffformteils aus Polyurethan.

Isocyanat und Polyol ermöglichen das Aufbringen der ersten und zweiten Komponente und Ausbilden des Kunststoffformteils im Rahmen eines Zwei-Komponenten-Spritzgussprozesses. Das Isocyanat und Polyol werden mit vorgegebenen Materialeigenschaften aufeinander abgestimmt und bereitgestellt und an vorgegebener Position auf der Anlagefläche des Halteelements aufgespritzt. Das Polyol wird als arbeitsfähige zweite Komponente hinsichtlich seiner Zusammensetzung insbesondere dahingehend bereitgestellt, um einen gewünschten selbstschäumenden Prozess einzuleiten. Das Polyol weist zum Beispiel eine vorgegebene Menge Wasser auf, das in Kontakt mit dem Isocyanat reagiert und den selbstschäumenden Prozess und somit das Ausbilden des Kunststoffformteils initiiert. Darüber hinaus können die erste und/oder zweite Komponente Treibmittel aufweisen, um den selbstschäumenden Prozess gezielt zu beeinflussen.

Das Isocyanat und Polyol weisen insbesondere in Bezug auf Elastizität, Pumpfähigkeit, Dosierbarkeit und Viskosität vorgegebene Materialeigenschaften auf. Außerdem sind die beiden Komponenten dahingehend bereitgestellt, dass das auszubildende Kunststoffformteil ein gewünschtes haftendes Verhalten auf dem Halteelement aufweist, welches beispielsweise aus Metall gefertigt ist oder Metall aufweist. Die erste und zweite Komponente sind als Isocyanat und Polyol insbesondere so bereitgestellt, dass das Kunststoffformteil aus Polyurethan ausgebildet wird.

Gemäß einer Weiterbildung umfasst das Verfahren ein Aufbringen der pumpfähigen Substanz oder ein jeweiliges Aufbringen der ersten und zweiten Komponente an zwei oder mehr vorgegebenen, zueinander beabstandeten Positionen auf der Anlagefläche des Halteelements, sodass eine Mehrzahl von zueinander separaten Kunststoffformteilen ausgebildet wird.

Mittels des beschriebenen Verfahrens können auch mehrere, voneinander getrennte Kunststoffformteile auf der Anlagefläche des Halteelements ausgebildet werden, um einen zuverlässigen Abstand zwischen dem Halteelement und der zu bearbeitenden Scheibe sowie eine sichere Anlage des Halteelements an der Scheibe zu realisieren. Beispielsweise werden halbkugelförmige Kunststoffformteile an vorgegebenen Positionen auf dem Halteelement ausgebildet, an denen die Anlagefläche im Vergleich zu einer wesentlichen Erstreckungsebene erhaben ist, um so einen direkten Kontakt zwischen dem Halteelement und der Scheibe zu verhindern und lokalen Spannungsspitzen entgegenzuwirken. Auf diese Weise können die Kunststoffformteile materialsparend an den Positionen ausgebildet werden, an denen ein Abstand zwischen Scheibe und Halteelement nutzbringend ist. Dies kann zu einem kostengünstigen und zeitsparenden Fertigungsprozess der Halteelemente und einer zu umschäumenden Scheibe beitragen und sich weiter vorteilhaft auf eine Konstruktion von Kraftfahrzeugen auswirken.

Gemäß einer Weiterbildung umfasst das Verfahren ein Bereitstellen eines Halteelements, das als umlaufender Rahmen ausgebildet ist und ein Aufbringen der Substanz beziehungsweise der ersten und zweiten Komponente auf der Anlagefläche des Halteelements und dadurch Ausbilden des Kunststoffformteils als durchgehendes umlaufendes Kunststoffelement.

Ein solches umlaufendes Kunststoffformteil realisiert zum Beispiel eine zuverlässige und stabile Anlage um das Halteelement in einem umschäumten Zustand sicher von der Scheibe beabstanden zu können und ein gezieltes Anbinden der betriebsfertigen Scheibe an die Karosserie des Kraftfahrzeugs zu ermöglichen. Zum anderen realisiert ein in sich geschlossenes Kunststoffformteil zusätzlich eine Dichtfunktion und dichtet einen Außenbereich gegenüber einem Innenbereich ab. Eine solche dichtende Wirkung kann auch in weiteren Bereichen Anwendung finden, in denen insbesondere Glas-Metall-Kombinationen eingesetzt werden.

Das umlaufende, rahmenförmige Halteelement kann als einstückiger Rahmen ausgebildet sein oder aus mehreren Haltekomponenten realisiert sein, die kraft-, form- oder stoffschlüssig miteinander verbunden sind. Ein solches Halteelement bildet somit einen stabilen Grundkörper zum Aufbringen und Ausbilden des Kunststoffformteils als durchgehendes umlaufendes Kunststoffelement.

Gemäß einer Weiterbildung umfasst das Verfahren ein Aufbringen der Substanz beziehungsweise der ersten und zweiten Komponente auf der Anlagefläche des Halteelements und dadurch Ausbilden des Kunststoffformteils als durchgehendes Kunststoffelement und Ausbilden einer Kavität.

Gemäß einer Weiterbildung umfasst das Verfahren ein Bereitstellen des Halteelements mit einer Ausnehmung und/oder ein Einbringen einer Ausnehmung in das Halteelement, die das Halteelement in dem Bereich der Kavität durchdringt.

Mittels des beschriebenen Verfahrens kann auch auf der Anlagefläche des Halteelements ein durchgehendes Kunststoffformteil ausgebildet werden, welches einen zuverlässigen Abstand zwischen der Scheibe und dem anliegenden Halteelement realisiert und eine Kavität zwischen der Scheibe und dem Halteelement abdichtet. Die Kavität wird durch das Kunststoffformteil begrenzt und durch dieses gegenüber einem Außenbereich abgedichtet. Auf diese Weise kann auf einen Einsatz von einem Dichtband verzichtet werden, um vorgegebene Bereiche zu begrenzen und gegenüber ungewollten Einflüssen abzudichten.

Ein solches durchgehendes Kunststoffelement bildet somit eine Abdichtbarriere, die aufgrund des beschriebenen Auftragens kontrolliert und insbesondere maschinell und prozesssicher aufgebracht werden kann. In Abhängigkeit vorgegebener Prozessparameter, wie beispielsweise einer Auftragungsgeschwindigkeit der bereitgestellten Substanz oder der ersten und zweiten Komponente, kann das Kunststoffformteil mit gewünschter Höhe ausgebildet werden, sodass ein vorgegebener Abstand zwischen der Scheibe und dem anliegenden Halteelement realisierbar ist. Die Höhe des Kunststoffformteils bezieht sich zum Beispiel auf eine Normale zur Erstreckungsebene Anlagefläche des Halteelements und kann nutzbringend an einen vorgesehenen Bauraum angepasst werden. Das Kunststoffformteil kann durchgehend und in sich geschlossen auf der Anlagefläche des Halteelements ausgebildet sein, oder es ist durchgehend mit zwei freien Enden ausgebildet. Das Kunststoffformteil kann sich auch über einen Rand der Anlagefläche beziehungsweise des Halteelements hinaus erstrecken und im Zusammenwirken mit angrenzenden Komponenten eine Kavität abdichten.

Mittels der beschriebenen Weiterbildung können gezielt Kavitäten von zu umschäumenden oder zu verklebenden Flächen begrenzt und abgedichtet werden, wobei das durchgehende Kunststoffelement abhängig von den vorgegebenen Materialeigenschaften der pumpfähigen Substanz oder der ersten und zweiten Komponente eine vorgegebene Dichtheit ausbildet. Eine Ausnehmung, die das Halteelement in dem Bereich der Kavität durchdringt, ermöglicht es auch in einem angeordneten oder anliegenden Zustand der Scheibe an dem Halteelement die Kavität mit selbstschäumendem Material auszufüllen. Auf diese Weise kann beispielsweise Polyurethan auch nachträglich in die Kavität eingebracht werden.

Gemäß einer weiteren Weiterbildung umfasst das Verfahren ein Bereitstellen einer zu bearbeitenden Scheibe für das Kraftfahrzeug, ein Positionieren der Scheibe sowie ein Positionieren des Halteelements mit dem Kunststoffformteil an der Scheibe.

Gemäß einer Weiterbildung umfasst das Verfahren ein Umschäumen des Halteelements und dadurch Ausbilden einer Umschäumung, die das Halteelement mit der Scheibe koppelt.

Auf diese Weise wird das Verfahren dahingehend erweitert, dass das vorbearbeitete Halteelement für ein zuverlässiges Umschäumen der Scheibe eingesetzt wird und mit dieser gekoppelt wird. Somit wird zum Beispiel ein vorgefertigtes Modul für ein Kraftfahrzeug realisiert, bei dem die Scheibe, das Halteelement und gegebenenfalls weitere Komponenten miteinander verbunden sind. Das umschäumte Halteelement realisiert beispielsweise eine Montageschnittstelle, die ein Anbinden der Scheibe an einer Karosserie des Kraftfahrzeugs ermöglicht.

Eine erfindungsgemäße Anordnung für ein Kraftfahrzeug umfasst ein Halteelement mit einer Anlagefläche, die zur Anlange an eine Scheibe ausgebildet ist, und ein Kunststoffformteil, das aus einer pumpfähigen Substanz mittels eines selbstschäumenden Prozesses an mindestens einer vorgegebenen Position auf der Anlagefläche des Halteelements ausgebildet ist, um bei einem Anliegen der Scheibe an dem Halteelement einen vorgegebenen Abstand zwischen der Scheibe und dem Halteelement auszubilden und bei einem Weiterverarbeiten der Scheibe Spannungskräften zwischen der Scheibe und dem Halteelement entgegenzuwirken.

Eine solche Anordnung ist insbesondere mit einem der zuvor beschriebenen Verfahren herstellbar, sodass sämtliche für das Verfahren offenbarten Eigenschaften und Merkmale auch für die Anordnung offenbart sind und umgekehrt.

Gemäß einer Weiterbildung der Anordnung weist das Kunststoffformteil Polyurethan auf.

Polyurethan ist ein beispielhaftes Material, aus dem das Kunststoffformteil mittels der pumpfähigen Substanz, insbesondere mittels der ersten und zweiten Komponente, auf einfache und kostengünstige Weise hergestellt werden kann. Darüber hinaus sind auch andere Materialien möglich, die mittels der Substanz oder einer ersten und zweiten Komponente ein Ausbilden eines Kunststoffformteils mit vorgegebener Elastizität ermöglichen, um einen vorgegebenen Abstand zwischen der Scheibe und dem Halteelement zu realisieren und die Scheibe zuverlässig vor Beschädigungen durch Spannungskräfte zu schützen.

Gemäß einer Weiterbildung der Anordnung sind jeweils zwei oder mehr zueinander separate Kunststoffformteile auf der Anlagefläche des Halteelements ausgebildet.

Gemäß einer Weiterbildung der Anordnung sind das Halteelement als umlaufender Rahmen und das Kunststoffformteil als durchgehendes umlaufendes Kunststoffelement ausgebildet.

Ein erfindungsgemäßes System für ein Kraftfahrzeug umfasst eine der zuvor beschriebenen Anordnungen, eine Scheibe für das Kraftfahrzeug und eine Umschäumung, die das Halteelement mit der Scheibe koppelt, sodass ein Anbinden der Scheibe an einer Karosserie des Kraftfahrzeugs realisierbar ist.

Das System realisiert somit ein kostengünstig fertigbares Modul, welches für die Konstruktion des Kraftfahrzeugs mittels der Montageschnittstelle an der Karosserie anordbar ist.

Ausführungsbeispiele der Erfindung sind im Folgenden anhand der schematischen Zeichnungen näher erläutert. Es zeigen:
- Figur 1: ein Fahrzeugdach in perspektivischer Ansicht,
- Figur 2: ein Ausführungsbeispiel einer Anordnung für ein Kraftfahrzeug,
- Figur 3A: ein weiteres Ausführungsbeispiel der Anordnung für ein Kraftfahrzeug,
- Figur 3B: ein Ausführungsbeispiel eines Kunststoffformteils,
- Figur 4: ein Ablaufdiagramm für ein Verfahren zum Bearbeiten eines Halteelements.

Elemente gleicher Konstruktion oder Funktion sind figurenübergreifend mit den gleichen Bezugszeichen gekennzeichnet.

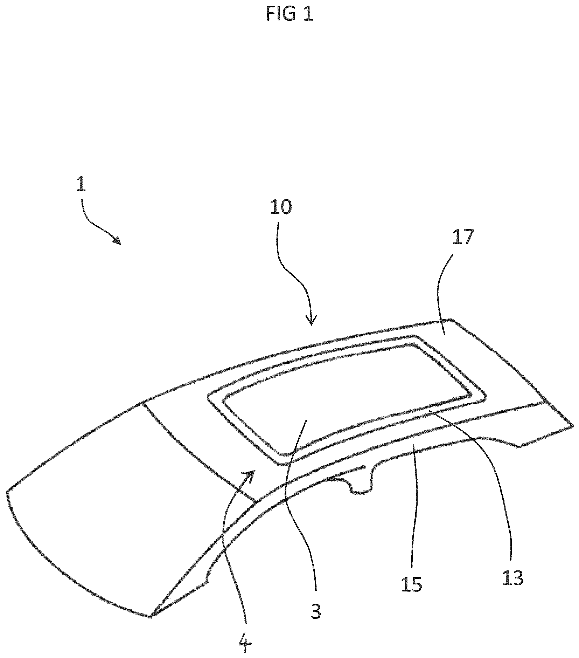

Figur 1 zeigt in einer perspektivischen Ansicht schematisch ein System für ein Kraftfahrzeug 1, das eine Scheibe 3 und eine Anordnung 10 umfasst. Die Scheibe 3 ist in einem Fahrzeugdach 17 des Kraftfahrzeugs 1 angeordnet, und realisiert beispielsweise einen Teil eines verschiebbaren Deckels 4, um wahlweise eine Dachöffnung des Fahrzeugdachs 17 freizugeben und zu verschließen.

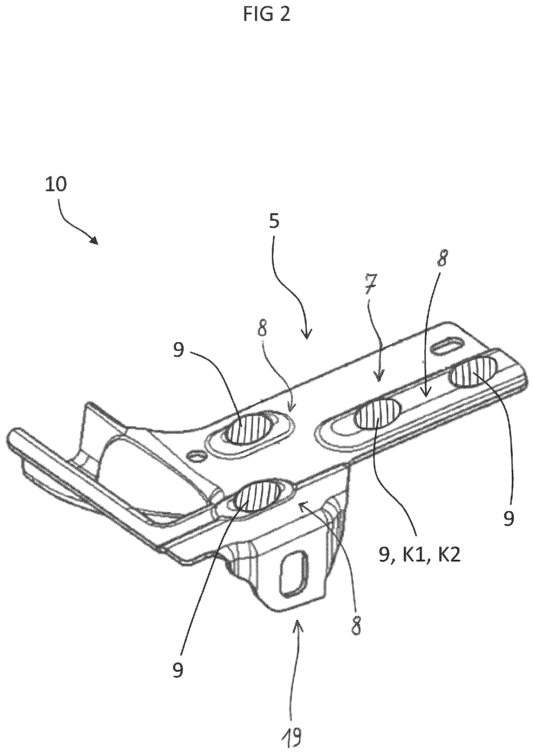

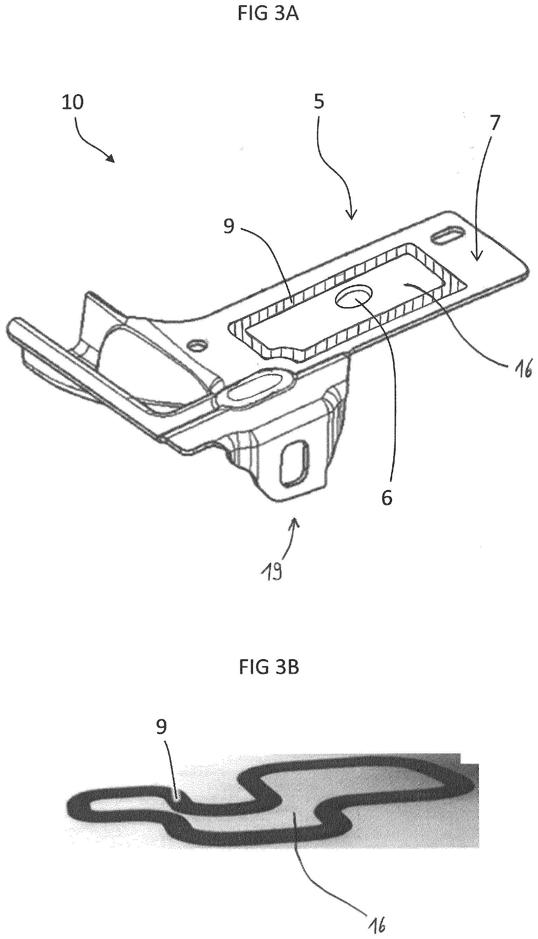

Das System weist weiter eine Umschäumung 13 auf, die umlaufend an einem Rand der Scheibe 3 ausgebildet ist und die Anordnung 10 mit einer Karosserie 15 des Kraftfahrzeugs 1 koppelt. Mittels der Anordnung 10 und einem zu der Anordnung 10 korrespondierenden Herstellungsverfahren ist eine zuverlässige und kostensparende Verarbeitung der Scheibe 3 für das Kraftfahrzeug 1 möglich, die zu einer vereinfachten und zeitsparenden Konstruktion des Systems und des Kraftfahrzeugs 1 beiträgt. Die Anordnung 10 und das korrespondierende Verfahren zum Herstellen einer solchen Anordnung 10 werden anhand der nachfolgenden Figuren 2 und 3 näher erläutert.

Figur 2 zeigt in einer perspektivischen Ansicht ein Ausführungsbeispiel der Anordnung 10 mit einem Halteelement 5, das in Form eines Haltewinkels realisiert ist und das zum Anliegen an der Scheibe 3 ausgebildet ist. Das Halteelement 5 weist eine Anlagefläche 7 auf, die auch als Oberfläche des Halteelements 5 bezeichnet werden kann und die mehrere Erhebungen 8 aufweist.

Auf den Erhebungen 8 der Anlagefläche 7 sind an vorgegebenen Positionen Kunststoffformteile 9 angeordnet, die mittels eines selbstschäumenden Prozesses kontrolliert ausgebildet sind. Zum Ausbilden der Kunststoffformteile 9 ist eine Substanz bereitgestellt, die mit vorgegebenen Materialeigenschaften, insbesondere hinsichtlich ihrer Viskosität, pumpfähig und dosierbar ausgebildet ist. Eine solche Substanz umfasst zum Beispiel eine erste Komponente K1 und eine zweite Komponente K2 mit jeweils vorgegebenen Materialeigenschaften, die aufeinander abgestimmt ein kontrolliertes und zuverlässiges Ausbilden der Kunststoffformteile 9 mittels eines selbstschäumenden Prozesses ermöglichen.

Die Kunststoffformteile 9 weisen eine vorgegebene Elastizität auf, um bei einem Anliegen der Scheibe 3 oder eines anderen plattenförmigen Werkstücks für das Kraftfahrzeug 1 an dem Halteelement 5 einen gewünschten Abstand zwischen der Scheibe 3 und dem Halteelement 5 zu realisieren und bei einem Weiterverarbeiten der Scheibe 3, wie einem Umschäumen, Spannungskräften zwischen der Scheibe 3 und dem Halteelement 5 entgegenzuwirken. Durch die Kunststoffformteile 9 wird ein direkter Kontakt zwischen der Anliegenden Scheibe 3 und dem Halteelement 5 vermieden oder zumindest eine direkte Kontaktfläche reduziert, um lokale Spannungsspitzen auszugleichen und Beschädigungen der Anliegenden Scheibe 3 zu verhindern.

Das Halteelement 5 weist weiter eine Montageschnittstelle 19 auf, die ein Anbinden des Systems mit dem Halteelement 5 und der umschäumten Scheibe 3 an die Karosserie 15 des Kraftfahrzeugs 1 ermöglicht. In Bezug auf einen vollen Umfang der Dachöffnung des Fahrzeugdachs 17 weist die Anordnung 10 beispielsweise sechs zueinander separate Halteelemente 5 auf, die, wie in Figur 2 dargestellt, jeweils als Haltewinkel realisiert sein können und ein zuverlässiges Umschäumen der Scheibe 3 und Anbinden des Systems an die Karosserie 15 des Kraftfahrzeugs 1 ermöglichen.

Figur 3A zeigt in einer perspektivischen Ansicht ein weiteres Ausführungsbeispiel der Anordnung 10 mit einem Halteelement 5. Auf der Anlagefläche 7 des Halteelements 5 ist das Kunststoffformteil 9 als durchgehendes Kunststoffelement ausgebildet, das eine Kavität 16 umschließt. Die Kavität 16 ist durch das Kunststoffformteil 9 begrenzt, sodass das Kunststoffformteil 9 eine Barriere ausbildet. In einem anliegenden Zustand der Scheibe 3 und des Halteelements 5 ist die Kavität 16 durch das Kunststoffformteil 9 eingeschlossen und durch dieses gegenüber einem Außenbereich abgedichtet.

Außerdem weist das Halteelement 5 eine Ausnehmung 6 auf, die das Halteelement 5 in dem Bereich der Kavität 16 durchdringt. Zum Beispiel weist das Halteelement 5 bereits bei der Bereitstellung eine solche Ausnehmung 6 auf oder sie wird im Rahmen des Bearbeitens des Halteelements 5 in das Halteelement 5 an vorgegebener Position eingebracht.

Gemäß weiteren Ausführungsbeispielen (nicht explizit gezeigt) ist das Kunststoffformteil 9 nicht in sich geschlossen sondern weist zwei freie Enden auf. Beispielsweise dichtet das Kunststoffformteil 9 im Betrieb dann die Kavität 16 zusammen mit einem weiteren Element ab, das an die freien Enden angrenzend angeordnet ist.

Das durchgehende Kunststoffformteil 9 realisiert somit einen besonders zuverlässigen Abstand zwischen der Scheibe 3 und dem anliegenden Halteelement 5 und dichtet die Kavität 16 zwischen der Scheibe 3 und dem Halteelement 5 gegen unerwünschte äußere Einflüsse ab. Auf diese Weise kann auf einen Einsatz von einem Dichtband verzichtet werden, um vorgegebene Bereiche zu begrenzen und abzudichten.

Ein solches durchgehendes Kunststoffelement 9 bildet somit eine Abdichtbarriere, die in Abhängigkeit vorgegebener Prozessparameter, wie beispielsweise einer Auftragungsgeschwindigkeit der bereitgestellten Substanz oder der ersten und zweiten Komponente K1 und K2, mit gewünschter Höhe ausgebildet werden kann, sodass ein vorgegebener Abstand zwischen der Scheibe 3 und dem anliegenden Halteelement 5 realisierbar ist. Die Höhe des Kunststoffformteils 9 bezieht sich zum Beispiel auf eine Oberflächennormale zur wesentlichen Erstreckungsebene der Anlagefläche 7 des Halteelements 5.

Figur 3B zeigt ein weiteres Ausführungsbeispiel eines durchgehenden in sich geschlossenen Kunststoffformteils 9, das eine Kavität 16 umgibt. Die Ausgestaltung des Kunststoffformteils 9 kann auf einfache Weise hinsichtlich einer benötigten Geometrie und Form angepasst werden.

Auf diese Weise können mittels der beschriebenen Anordnung und einem zum Herstellen der Anordnung korrespondierenden Verfahren Kavitäten von zu umschäumenden oder zu verklebenden Flächen begrenzt und zuverlässig abgedichtet werden. Abhängig von den vorgegebenen Materialeigenschaften der pumpfähigen Substanz kann eine vorgegebene Dichtheit ausbildet werden.

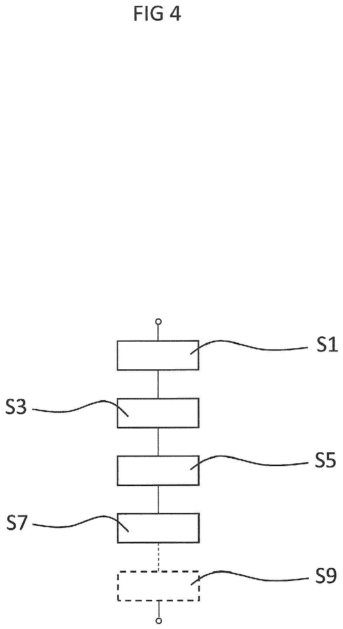

Figur 4 zeigt ein schematisches Ablaufdiagramm für ein Verfahren zum Bearbeiten des Halteelements 5 und zum Herstellen der Anordnung 10, wie sie beispielhaft in Figur 2 und Figur 3A illustriert sind. Die Anordnung 10 kann in weiteren Schritten des Verfahrens zum Beispiel umschäumt werden, sodass das vorbearbeitete Halteelement 5 mit der Scheibe 3 verbunden wird und ein System für das Kraftfahrzeug 1 realisiert, welches als Modul, wie beispielhaft in Figur 1 dargestellt, an der Karosserie 15 angebracht werden kann.

In einem ersten Schritt S1 werden das Halteelement 5 sowie die aufzutragende Substanz beziehungsweise die erste und zweite Komponente K1 und K2 zum Ausbilden des oder der Kunststoffformteile 9 bereitgestellt. Die Substanz oder die erste und zweite Komponente K1 und K2 weisen jeweils vorgegebene Materialeigenschaften auf, die insbesondere hinsichtlich nachfolgender Schritte des Verfahrens vorgegeben, bereitgestellt und aufeinander abgestimmt sind. Dies betrifft unter anderem den einzuleitenden selbstschäumenden Prozess und das Ausbilden der Kunststoffformteile 9 mit vorgegebener Geometrie und gewünschten Materialeigenschaften.

In einem Schritt S3 werden die erste Komponente K1 und die zweite Komponente K2 an mindestens einer vorgegebenen Position, zum Beispiel auf einer Erhebung 8, auf der Anlagefläche 7 des Halteelements 5 aufgebracht. Ein solches Aufbringen erfolgt beispielsweise im Rahmen eines Spritzprozesses, bei dem die erste und zweite Komponente K1 und K2 mittels eines Spritzwerkzeugs aufgetragen werden. Beispielsweise sind die erste und zweite Komponente K1 und K2 in jeweiligen Materialbehältern bereitgestellt und werden zum Aufbringen auf die Anlagefläche 7 des Halteelements 5 über Zuleitungen einem Mischkopf zugeführt und mittels einer Dosierdüse aufgetragen. In dem Mischkopf werden die erste und zweite Komponente K1 und K2 mit einem vorgegebenen Mengenverhältnis reaktiv bereitgestellt und mittels der Dosierdüse an gewünschter Position auf der Anlagefläche 7 des Halteelements 5 aufgetragen, sodass erst unmittelbar nach dem Auftragen der ersten und zweiten Komponente K1 und K2 der selbstschäumende Prozess zum Ausbilden des Kunststoffformteils 9 initiiert wird.

Um ein Aufbringen mittels Aufspritzen zu ermöglichen, weisen die erste und zweite Komponente K1, K2 jeweils eine entsprechende Viskosität oder Zähigkeit auf. Die erste und zweite Komponente K1, K2 sind beispielsweise fließ- und/oder pumpfähig und ermöglichen somit ein kontrolliertes Auftragen mit zuverlässiger Dosierbarkeit.

Ein weiterer Schritt S5 repräsentiert den selbstschäumenden Prozess, der durch Auftragen der ersten und zweiten Komponente K1, K2 initiiert wird. Dabei kontaktieren und vermischen sich die erste und zweite Komponente K1, K2, zum Beispiel unmittelbar nach dem Austreten aus einer Dosierdüse. Auf diese Weise wird das oder die Kunststoffformteile 9 mit vorgegebener Elastizität und Geometrie ausgebildet, um bei einem Anliegen der Scheibe 3 an dem Halteelement 5 einen vorgegebenen Abstand zu realisieren und Spannungskräften zwischen der Scheibe 3 und dem Halteelement 5, insbesondere bei einem Umschäumen der Scheibe 3 und des Halteelements 5, entgegenwirken zu können. Beispielsweise sind die erste Komponente K1 als Isocyanat und die zweite Komponente K2 als Polyol vorgegeben bereitgestellt und bilden die Kunststoffformteile 9 aus Polyurethan aus.

Die erste und zweite Komponente K1 und K2 können insbesondere maschinell auf der Anlagefläche 7 des Halteelements 5 aufgebracht werden. Auf diese Weise wird eine zeitsparende und prozesssichere Applikation der ersten und zweiten Komponente K1 und K2 ermöglicht, die ein kontrolliertes und zuverlässiges Ausbilden der Kunststoffformteile 9 realisieren und insbesondere in Bezug auf Form und Position der auszubildenden Kunststoffformteile 9 eine Reproduzierbarkeit ermöglichen.

Mittels maschinellen Aufbringens der ersten und zweiten Komponente K1 und K2 werden zum Beispiel Positionierungsfehler des jeweiligen auszubildenden Kunststoffformteils 9 vermieden, die beispielsweise bei einem manuellen Aufkleben von Schaumbändern nur schwierig zu unterbinden sind. Beispielsweise werden die erste und zweite Komponente K1 und K2 mittels einer Spritzpistole in Tropfenform an mehreren vorgegebenen Positionen auf der Anlagefläche 7 des Halteelements 5 aufgebracht und realisieren punkt- oder zylinderförmige Kunststoffformteile 9. Somit ist ein Ausbilden der Kunststoffformteile 9 im Wesentlichen unabhängig von der Geometrie des Halteelements 5 und es wird ein material- und zeitsparendes Aufbringen ermöglicht, da die Kunststoffformteile 9 zielgerichtet an den Positionen ausgebildet werden können, die für eine sichere und zuverlässige Anlage der Scheibe 3 benötigt werden. Ein zeitaufwendiges Anpassen der Kunststoffformteile 9 an die Geometrie des Halteelements 5 ist nicht notwendig, wie es beispielsweise bei vorgefertigten Anlageelementen der Fall ist.

Das mit Kunststoffformteilen 9 versehene Halteelement 5 bildet somit eine schonende Anlage mit vorgegebener Elastizität für die zu bearbeitende Scheibe 3, sodass beispielweise ein zuverlässiger und sicherer Abstand zu der Scheibe 3 für einen nachfolgenden Umschäumungsprozess realisiert ist. Die Kunststoffformteile 9 realisieren jeweils als elastisches Element an den vorgegebenen Positionen auf der Anlagefläche 7 des Halteelements 5 einen Puffer zwischen dem Halteelement 5 und der anliegenden Scheibe 3. Insbesondere bei metallischen Halteelementen 5 und Scheiben 3 aus Glas ist ein direkter Kontakt zwischen Halteelement 5 und Scheibe 3 zu unterbinden, um Beschädigungen der Anliegenden Scheibe 3 zu vermeiden. Im Rahmen eines solchen Verfahrens können eine Vielzahl von Kunststoffforteilen 9 ausgebildet werden, die beabstandet zueinander auf der Anlagefläche 7 des Halteelements 5 angeordnet sind, wie es in dem Ausführungsbeispiel gemäß Figur 2 dargestellt ist. Alternativ oder zusätzlich kann das Kunststoffformteil 9 als durchgehendes Kunststoffelement auf der Anlagefläche 7 des Halteelements 5 ausgebildet werden, das zum Beispiel in sich geschlossen ist und eine Kavität 16 einschließt, wie es in den Ausführungsbeispielen gemäß Figur 3A und 3B dargestellt ist.

Beispielsweise weist das bereitgestellte Halteelement 5 bereits eine Ausnehmung 6 auf, die das Halteelement 5 im Bereich der Kavität 16 durchdringt. Oder die Ausnehmung 6 wird im Rahmen des Verfahrens in das Halteelement 5 eingebracht, sodass sie die Anlagefläche 7 des Halteelements 5 im Bereich der Kavität 16 durchdringt. Die Ausnehmung 6 ermöglicht es auch in einem angeordneten oder anliegenden Zustand der Scheibe 3 an dem Halteelement 5 die Kavität 16 nachträglich mit selbstschäumendem Material auszufüllen. Auf diese Weise kann beispielsweise Polyurethan auch nachträglich in die Kavität 16 eingebracht werden.

In einem weiteren Schritt S7 wird die zu bearbeitende Scheibe 3 für das Kraftfahrzeug 1 bereitgestellt und für ein Umschäumen wird das oder werden die Halteelemente 5 mit einem oder mehreren Kunststoffformteilen 9 an oder auf der Scheibe 3 positioniert, sodass die jeweilige Anlagefläche 7 der Halteelemente 5 der Scheibe 3 zugewandt ist. Nachfolgend werden die Scheibe 3 und die Halteelemente 5 umschäumt und dadurch eine Umschäumung 13 ausgebildet, die die Halteelemente 5 mit der Scheibe 3 koppelt.

Auf diese Weise werden die vorbearbeiteten Halteelemente 5 mit der Scheibe 3 gekoppelt und somit beispielsweise ein vorgefertigtes System oder Modul für das Kraftfahrzeug 1 realisiert, wie es in dem Ausführungsbeispiel gemäß Figur 1 dargestellt ist. Weisen die Halteelemente 5, wie in den Figuren 2 und 3A dargestellt, eine Montageschnittstelle 19 auf, so kann in einem optionalen nächsten Schritt S9 das vorgefertigte System an die Karosserie 15 des Kraftfahrzeugs 1 angebunden werden. Dies erfolgt zum Beispiel mittels Verschrauben, Verkleben und/oder Verschweißen.

Mittels des beschriebenen Verfahrens kann somit auf den Einsatz von kostspieligen Schaumbändern verzichtet werden, die manuell aufgeklebt und hinsichtlich ihrer Abmessungen zeitaufwendig an verschiedene Anlageelemente angepasst werden müssen. Auf diese Weise ist eine einfache und kostengünstige Bearbeitung des Halteelements 5 realisierbar, welches weiter eine zuverlässige und kostensparende Verarbeitung der Scheibe 3 und Fertigung des Systems für das Kraftfahrzeug 1 ermöglicht und zu einer vereinfachten und zeitsparenden Konstruktion des Kraftfahrzeugs 1 beiträgt.

### Bezugszeichenliste

- 1: Kraftfahrzeug
- 3: Scheibe
- 4: Deckel
- 5: Halteelement
- 6: Ausnehmung des Halteelements
- 7: Anlagefläche
- 8: Erhebungen
- 9: Formteil
- 10: Anordnung
- 13: Umschäumung
- 15: Karosserie
- 16: Kavität
- 17: Fahrzeugdach
- 19: Montageschnittstelle

- K1: erste Komponente
- K2: zweite Komponente

## Patentansprüche

1. Verfahren zum Bearbeiten eines Halteelements (5) für ein Kraftfahrzeug (1), umfassend
- Bereitstellen eines Halteelements (5) mit einer Anlagefläche (7), die zur Anlage an eine Scheibe (3) ausgebildet ist,
- Bereitstellen einer pumpfähigen Substanz mit vorgegebenen Materialeigenschaften, und
- maschinelles Aufbringen der bereitgestellten Substanz an mindestens einer vorgegebenen Position auf der Anlagefläche (7) des Halteelements (5) und dadurch Initiieren eines selbstschäumenden Prozesses, sodass in Abhängigkeit der Materialeigenschaften der Substanz ein Kunststoffformteil (9) mit vorgegebener Elastizität ausgebildet wird, um bei einem Anliegen der Scheibe (3) an dem Halteelement (5) einen vorgegebenen Abstand zwischen der Scheibe (3) und dem Halteelement (5) auszubilden und Spannungskräften zwischen der Scheibe (3) und dem Halteelement (5) entgegenzuwirken, wobei das Kunststoffformteil (9) so ausgebildet wird, dass es sich bei einem Anliegen der Scheibe (3) an dem Halteelement (5) lediglich zwischen der Scheibe (3) und dem Haltelement (5) erstreckt.

2. Verfahren nach Anspruch 1, wobei das Bereitstellen einer pumpfähigen Substanz mit vorgegebenen Materialeigenschaften und das Aufbringen der bereitgestellten Substanz umfasst:
- Bereitstellen einer ersten Komponente (K1) und einer zweiten Komponente (K2) mit jeweils vorgegebenen Materialeigenschaften, und
- maschinelles Aufbringen der ersten Komponente (K1) und der zweiten Komponente (K2) an mindestens einer vorgegebenen Position auf der Anlagefläche (7) des Halteelements (5) und dadurch Initiieren eines selbstschäumenden Prozesses, sodass in Abhängigkeit der jeweiligen Materialeigenschaften der ersten und zweiten Komponente (K1, K2) ein Kunststoffformteil (9) mit vorgegebener Elastizität ausgebildet wird.

3. Verfahren nach Anspruch 1 oder 2, umfassend Bereitstellen der ersten Komponente (K1) als Isocyanat und der zweiten Komponente (K2) als Polyol.

4. Verfahren nach Anspruch 3, umfassend Aufbringen der ersten und zweiten Komponente (K1, K2) und dadurch Ausbilden des Kunststoffformteils (9) aus Polyurethan.

5. Verfahren nach einem der Ansprüche 1 bis 4, umfassend Aufbringen der pumpfähigen Substanz an zwei oder mehr vorgegebenen zueinander beabstandeten Positionen auf der Anlagefläche (7) des Halteelements (5), sodass eine Mehrzahl von Kunststoffformteilen (9) ausgebildet wird.

6. Verfahren nach einem der Ansprüche 1 bis 4, umfassend
- Bereitstellen eines Halteelements (5), das als umlaufender Rahmen ausbildet ist, und
- Aufbringen der Substanz auf der Anlagefläche (7) des Halteelements (5) und dadurch Ausbilden des Kunststoffformteils (9) als durchgehendes umlaufendes Kunststoffelement.

7. Verfahren nach einem der Ansprüche 1 bis 4, umfassend Aufbringen der Substanz auf der Anlagefläche (7) des Halteelements (5) und dadurch Ausbilden Kunststoffformteils (9) als durchgehendes Kunststoffelement und Ausbilden einer Kavität (16).

8. Verfahren nach Anspruch 7, umfassend Bereitstellen des Halteelements (5) mit einer Ausnehmung (6) und/oder Einbringen einer Ausnehmung (6) in das Halteelement (5), die das Halteelement (5) in dem Bereich der Kavität (16) durchdringt.

9. Verfahren nach einem der Ansprüche 1 bis 8, umfassend
- Bereitstellen einer zu bearbeitenden Scheibe (3) für das Kraftfahrzeug (1),
- Positionieren der Scheibe (3), und
- Positionieren des Halteelements (5) mit dem Kunststoffformteil (9) in Anlage an die Scheibe (3).

10. Verfahren nach Anspruch 9, umfassend Umschäumen des Halteelements (5) und dadurch Ausbilden einer Umschäumung (13), die das Halteelement (5) mit der Scheibe (3) koppelt.

11. Anordnung (10) für ein Kraftfahrzeug (1), umfassend
- ein Halteelement (5) mit einer Anlagefläche (7), die zur Anlage an eine Scheibe (3) ausgebildet ist, und
- ein Kunststoffformteil (9), um bei einem Anliegen der Scheibe (3) auf dem Halteelement (5) einen vorgegebenen Abstand zwischen der Scheibe (3) und dem Halteelement (5)auszubilden und Spannungskräften zwischen der Scheibe (3) und dem Halteelement (5) entgegenzuwirken, wobei das Kunststoffformteil (9) so ausgebildet ist, dass es sich bei einem Anliegen der Scheibe (3) an dem Halteelement (5) lediglich zwischen der Scheibe (3) und dem Haltelement (5) erstreckt, **dadurch gekennzeichnet, dass** das Kunststoffformteil (9) maschinell aufgebracht und aus einer pumpfähigen Substanz mittels eines selbstschäumenden Prozesses an mindestens einer vorgegebenen Position auf der Anlagefläche (7) des Halteelements (5) ausgebildet ist.

12. Anordnung (10) nach Anspruch 11, wobei jeweils zwei oder mehr zueinander separate Kunststoffformteile (9) auf der Anlagefläche (7) des Halteelements (5) ausgebildet sind.

13. Anordnung (10) nach Anspruch 11 oder 12, wobei das Halteelement (5) als umlaufender Rahmen und das Kunststoffformteil (9) als durchgehendes umlaufendes Kunststoffelement ausgebildet sind.

14. Anordnung (10) nach Anspruch 11 oder 12, wobei das Kunststoffformteil (9) als durchgehendes Kunststoffelement mit einer Kavität (16) ausgebildet ist.

15. System für ein Kraftfahrzeug (1), umfassend
- eine Anordnung (10) nach einem der Ansprüche 11 bis 14,
- die Scheibe (3) für das Kraftfahrzeug (1), und
- eine Umschäumung (13), die das Halteelement (5) mit der Scheibe (3) koppelt, um die Scheibe (3) an einer Karosserie (15) des Kraftfahrzeugs (1) anzubinden.

## Claims

1. Method for processing a holding element (5) for a motor vehicle (1), comprising
- providing a holding element (5) having a bearing surface (7) which is designed to bear against a window (3),
- providing a pumpable substance having predetermined material properties, and
- mechanically applying the provided substance at at least one predetermined position to the bearing surface (7) of the holding element (5) and thus initiating a self-foaming process, such that, depending on the material properties of the substance, a plastic moulding (9) with predetermined elasticity is formed in order, when the window (3) bears against the holding element (5), to form a predetermined distance between a window (3) and the holding element (5) and to counteract stress forces between the window (3) and the holding element (5), wherein the plastic moulding (9) is formed in such way that, when the window (3) bears against the holding element (5), said moulding extends only between the window (3) and the holding element (5).

2. Method according to Claim 1, wherein the provision of a pumpable substance with predetermined material properties and the application of the provided substance comprises:
- providing a first component (K1) and a second component (K2) having respective predetermined material properties, and
- mechanically applying the first component (K1) and the second component (K2) at least one predetermined position to the bearing surface (7) of the holding element (5) and thus initiating a self-foaming process such that, depending on the respective material properties of the first and second component (K1, K2), a plastic moulding (9) with predetermined elasticity is formed.

3. Method according to Claim 1 or 2, comprising providing the first component (K1) as isocyanate and the second component (K2) as polyol.

4. Method according to Claim 3, comprising applying the first and second component (K1, K2) and thus forming the plastic moulding (9) from polyurethane.

5. Method according to one of Claims 1 to 4, comprising applying the pumpable substance at two or more predetermined spaced-apart positions to the bearing surface (7) of the holding element (5) such that a plurality of plastic mouldings (9) are formed.

6. Method according to one of Claims 1 to 4, comprising
- providing a holding element (5) which is formed as a peripheral frame, and
- applying the substance to the bearing surface (7) of the holding element (5) and thus forming the plastic moulding (9) as a continuous peripheral plastic element.

7. Method according to one of Claims 1 to 4, comprising applying the substance to the bearing surface (7) of the holding element (5) and thus forming the plastic moulding (9) as a continuous plastic element and forming a cavity (16).

8. Method according to Claim 7, comprising providing the holding element (5) having an aperture (6) and/or incorporating an aperture (6) into the holding element (5) that traverses the holding element (5) in the region of the cavity (16).

9. Method according to one of Claims 1 to 8, comprising
- providing a window (3) to be processed for the motor vehicle (1),
- positioning the window (3), and
- positioning the holding element (5) with the plastic moulding (9) in contact with the window (3).

10. Method according to Claim 9, comprising encapsulating the holding element (5) with foam and thus forming a foam encapsulation (13) which couples the holding element (5) to the window (3).

11. Arrangement (10) for a motor vehicle (1), comprising
- a holding element (5) having a bearing surface (7), which is designed to bear against a window (3), and
- a plastic moulding (9) in order, when the window (3) bears on the holding element (5), to form a predetermined distance between the window (3) and the holding element (5) and to counteract stress forces between the window (3) and the holding element (5), wherein the plastic moulding (9) is formed in such a way that, when the window (3) bears against the holding element (5), said moulding extends only between the window (3) and the holding element (5),
**characterized in that** the plastic moulding (9) is applied mechanically and is formed from a pumpable substance by means of a self-foaming process at at least one predetermined position on the bearing surface (7) of the holding element (5).

12. Arrangement (10) according to Claim 11, wherein in each case two or more mutually separate plastic mouldings (9) are formed on the bearing surface (7) of the holding element (5).

13. Arrangement (10) according to Claim 11 or 12, wherein the holding element (5) is formed as a peripheral frame, and the plastic moulding (9) is formed as a continuous peripheral plastic element.

14. Arrangement (10) according to Claim 11 or 12, wherein the plastic moulding (9) is formed as a continuous plastic element with a cavity (16).

15. System for a motor vehicle (1), comprising
- an arrangement (10) according to one of Claims 11 to 14,
- the window (3) for the motor vehicle (1), and
- a foam encapsulation (13) which couples the holding element (5) to the window (3) in order to attach the window (3) to a body (15) of the motor vehicle (1).

## Revendications

1. Procédé de traitement d'un élément de retenue (5) destiné à un véhicule automobile (1), le procédé comprenant les étapes suivantes
- fournir un élément de retenue (5) pourvu d'une surface d'appui (7) qui est conçu pour venir en appui sur une vitre (3),
- fournir une substance apte au pompage qui présente des propriétés de matière prédéterminées, et
- appliquer mécaniquement la substance prévue à au moins une position prédéterminée sur la surface d'appui (7) de l'élément de retenue (5) et démarrer ainsi un processus d'auto-moussage de façon à former, en fonction des propriétés de matière de la substance, une pièce moulée (9) en matière plastique présentant une élasticité prédéterminée afin de ménager, lorsque la vitre (3) est en appui sur l'élément de retenue (5), une distance prédéterminée entre la vitre (3) et l'élément de retenue (5) et de s'opposer à des forces de tension entre la vitre (3) et l'élément de retenue (5), la pièce moulée (9) en matière plastique étant conçue de façon à s'étendre lorsque la vitre (3) est en appui sur l'élément de retenue (5), uniquement entre la vitre (3) et l'élément de retenue (5).

2. Procédé selon la revendication 1, la fourniture d'une substance apte au pompage qui présente des propriétés de matière prédéterminées et l'application de la substance fournie comprennent les étapes suivantes :
- fournir un premier composant (K1) et un deuxième composant (K2), qui présentent chacun des propriétés de matière prédéterminées, et
- appliquer mécaniquement le premier composant (K1) et le deuxième composant (K2) à au moins une position prédéterminée sur la surface d'appui (7) de l'élément de retenue (5) et démarrer ainsi un processus d'auto-moussage de façon à former, en fonction des propriétés de matière respectives des premier et deuxième composants (Kl, K2), une pièce moulée (9) en matière plastique qui présente une élasticité prédéterminée.

3. Procédé selon la revendication 1 ou 2, comprenant la fourniture du premier composant (Kl) sous forme d'isocyanate et du deuxième composant (K2) sous forme de polyol.

4. Procédé selon la revendication 3 comprenant les étapes suivantes
appliquer les premier et deuxième composants (K1, K2) et former ainsi la pièce moulée (9) en matière plastique à partir de polyuréthane.

5. Procédé selon l'une des revendications 1 à 4, comprenant l'étape suivante
appliquer de la substance apte au pompage à deux positions prédéterminées ou plus espacées les unes des autres sur la surface d'appui (7) de l'élément de retenue (5) de façon à former une pluralité de pièces moulées en plastique (9).

6. Procédé selon l'une des revendications 1 à 4, comprenant les étapes suivantes
- fournir un élément de retenue (5) qui est conçu comme un cadre périphérique, et
- appliquer la substance sur la surface d'appui (7} de l'élément de retenue (5) et former ainsi la pièce moulée (9) en matière plastique sous la forme d'un élément en matière plastique périphérique continu.

7. Procédé selon l'une des revendications 1 à 4, comprenant les étapes suivantes
appliquer la substance sur la surface d'appui (7) de l'élément de retenue (5) et former ainsi une pièce moulée (9) en matière plastique sous la forme d'un élément en matière plastique continu et former une cavité (16).

8. Procédé selon la revendication 7 comprenant les étapes suivantes
pourvoir l'élément de retenue (5) d'un évidement (6) et/ou ménager dans l'élément de retenue (5) un évidement (6) qui pénètre dans l'élément de retenue (5) au niveau de la cavité (16).

9. Procédé selon l'une des revendications 1 à 8, comprenant les étapes suivantes
- fournir une vitre à traiter (3) destinée au véhicule automobile (1),
- positionner la vitre (3), et
- positionner l'élément de retenue (5) avec la pièce moulée (9) en matière plastique en appui sur la vitre (3) .

10. Procédé selon la revendication 9 comprenant les étapes suivantes
faire mousser l'élément de retenue (5) et former ainsi une mousse (13) qui accouple l'élément de retenue (5) à la vitre (3).

11. Ensemble (10) destiné à un véhicule automobile (1) et comprenant
- un élément de retenue (5) pourvu d'une surface d'appui (7) qui est conçue pour venir en appui sur une vitre (3), et
- une pièce moulée (9) en matière plastique destinée, lorsque la vitre (3) est en appui sur l'élément de retenue (5), à former une distance prédéterminée entre la vitre (3) et l'élément de retenue (5) et à s'opposer à des forces de tension entre la vitre (3) et l'élément de retenue (5), la pièce moulée (9) en matière plastique étant conçue de façon à s'étendre, lorsque la vitre (3) est en appui sur l'élément de retenue (5), uniquement entre la vitre (3) et l'élément de retenue (5), **caractérisé en ce que** la pièce moulée (9) en matière plastique est appliquée mécaniquement et est formée à partir d'une substance apte au pompage au moyen d'un processus d'auto-moussage à au moins une position prédéterminée sur la surface d'appui (7) de l'élément de retenue (5).

12. Ensemble (10) selon la revendication 11, deux pièces moulées (9) en matière plastique ou plus, séparées les unes des autres, sont formées sur la surface d'appui (7) de l'élément de retenue (5).

13. Ensemble (10) selon la revendication 11 ou 12, l'élément de retenue (5) étant conçu sous forme d'un cadre périphérique et la pièce moulée (9) en matière plastique étant conçue sous forme d'un élément en matière plastique périphérique continu.

14. Ensemble (10) selon la revendication 11 ou 12, la pièce moulée (9) en matière plastique étant conçue sous forme d'un élément en matière plastique continu pourvu d'une cavité (16).

15. Système destiné à un véhicule automobile (1) et comprenant
- un ensemble (10) selon l'une des revendications 11 à 14,
- la vitre (3) destinée au véhicule automobile (1), et
- une mousse (13) qui accouple l'élément de retenue (5) à la vitre (3) afin de relier la vitre (3) à une carrosserie (15) du véhicule automobile (1).
